# FASCICULE DE BREVET EUROPEEN

(11) **EP 2 057 450 B1**
(45) Date de publication et mention de la délivrance du brevet: **13.04.2016**
(21) Numéro de dépôt: 07823732.8
(22) Date de dépôt: 20.08.2007
(51) Int. Cl.: B23P 19/06, G01L 5/24, B25B 29/02

(54) **PROCEDE ET DISPOSITIF D'ETABLISSEMENT ET DE CONTROLE D'UN SERRAGE HYDRAULIQUE D'UN OU DE PLUSIEURS BOULONS**
VERFAHREN UND VORRICHTUNG ZUR EINRICHTUNG UND STEUERUNG DER HYDRAULISCHEN AUFSPANNUNG EINER ODER MEHRERER SCHRAUBEN
PROCESS AND DEVICE FOR SETTING UP AND CONTROLLING A HYDRAULIC CHUCKING OF ONE OR A PLURALITY OF BOLTS

(30) Priorité: 01.09.2006 FR 0607681
(43) Date de publication de la demande: 13.05.2009
(73) Titulaire: Aktiebolaget SKF, 415 50 Göteborg (SE)
(72) Inventeur: MONVILLE, Jean-Michel, F-78690 Les Essarts Le Roi (FR)
(74) Mandataire: Dossmann, Gérard
(86) Numéro de dépôt international: PCT/FR2007/051832
(87) Numéro de publication internationale: WO 2008/025922

(56) Documents cités:
- DE-A1- 2 846 668
- DE-A1- 4 313 778
- FR-A- 2 495 320
- FR-A1- 2 442 436
- FR-A1- 2 580 742
- FR-A1- 2 586 098
- US-A- 5 257 207
- US-B1- 6 167 764

## Description

L'invention concerne le domaine du serrage de boulon par précontrainte à froid, et en particulier un procédé de contrôle de la précontrainte de la tige du boulon, à l'issue du serrage. L'invention concerne également un dispositif pour la mise en oeuvre d'un tel procédé.

Des boulons, comprenant une tige, du type vis ou goujon, et un ou plusieurs écrous, sont utilisés pour assembler plusieurs pièces d'une structure. Il est connu, pour obtenir un serrage de qualité, de procéder à une extension d'une tige de serrage à l'aide d'un vérin hydraulique, puis d'accoster un écrou de serrage contre les pièces à serrer sans exercer de couple important, puis de relâcher l'effort d'extension sur la tige. La tige relâchée tend à récupérer sa longueur au repos, mais, étant bloquée par l'écrou, elle exerce un effort de serrage sur les pièces à serrer. Un tel procédé de précontrainte évite de serrer un écrou en lui appliquant un couple de vissage.

Par ailleurs, pour le serrage d'une bride circulaire, on alterne le serrage de différents boulons répartis autour de la bride à serrer. Un tel serrage suppose plusieurs étapes de serrage pour chacun des boulons. En effet, le serrage d'un boulon relâche les contraintes dans les boulons avoisinants. La demanderesse s'est aperçue que le nombre d'étapes de serrage de chaque boulon augmente rapidement avec le nombre de boulons répartis autour de la bride circulaire à serrer.

A titre d'exemple de serrage de plusieurs boulons, on peut citer le cas des paliers à roulement de plusieurs centaines de millimètres, voire de plusieurs mètres de diamètre, qui sont nécessaires pour la fixation des pales d'éolienne sur un moyeu central de l'hélice de l'éolienne ou pour la fixation de la génératrice électrique orientable équipée de l'hélice de l'éolienne en haut d'un mât fixe. L'une des bagues de ces énormes roulements est montée généralement en usine sur une partie de l'équipement, l'autre bague étant reliée à une bride de serrage circulaire de même dimension. Cette bride de serrage peut être assemblée avec la partie tournante de l'équipement sur le site d'assemblage final de l'éolienne. La fixation d'une seule de ces brides peut nécessiter une centaine de boulons.

Le desserrage intempestif d'un seul des nombreux boulons se répercute sur les autres boulons et risque de provoquer un voilage et des efforts sur la bride, amenant d'autres boulons à dépasser leur résistance élastique. Cela peut engendrer, par phénomène de dominos, une détérioration de l'ensemble de la fixation. Souvent, compte tenu des incertitudes de serrage, surtout quand c'est le serrage en couple qu'on utilise, on surdimensionne les boulons et les écrous. Cela n'améliore pas la précision du serrage. Cela augmente les dimensions et la masse de l'assemblage, ce qui est particulièrement pénalisant pour des équipements devant être assemblés à grande hauteur.

Le document FR 2 841 304 (SKF) décrit un dispositif comprenant une plaque annulaire équipée d'une pluralité de dispositifs hydrauliques répartis circonférentiellement. Ce dispositif permet un serrage global d'une pluralité de tiges filetées réparties autour d'une bride circulaire, par exemple. On applique simultanément une tension sur toutes les tiges filetées, on accoste des écrous de serrage sur une pièce à serrer sur chacune des tiges, puis on relâche simultanément la tension. La mise sous tension simultanée est particulièrement utile pour le serrage des brides circulaires où le nombre de boulons à serrer est très élevé. La mise sous tension simultanée des boulons évite le serrage alterné par étapes multiples de chacun des boulons. L'inconvénient d'un tel procédé est que la tension restant dans chaque boulon après relâchement simultané des tiges, est fonction de l'accostage de l'écrou de serrage. Si un des écrous de serrage a été imparfaitement accosté sur la bride à serrer pendant que la tige était étendue, la tension dans la partie serrée du boulon peut être très faible, alors que la tension d'extension a pu être contrôlée et que l'écrou semble serré. Il est nécessaire d'avoir un moyen de contrôle du serrage obtenu.

Le document FR 2 871 231 (SKF) décrit un procédé de contrôle de la tension résiduelle dans une partie utile d'une tige du type vis ou goujon délimitée par un écrou. Ce contrôle a lieu après que la tige a été mise sous tension par extension axiale, accostage de l'écrou et relâchement de la tige. Ce procédé de contrôle consiste à effectuer des mesures d'allongement de la tige en fonction de l'effort d'extension. L'inconvénient de ce procédé de contrôle est qu'il est individuel pour un boulon donné et qu'il nécessite de retendre la tige spécifiquement pour l'opération de contrôle.

Ce document cite également une autre méthode de contrôle, utilisant des boulons pigés pour déterminer l'allongement résiduel de la tige du boulon après relâchement. Une pige de référence est placée dans un passage axial usiné au centre du boulon à contrôler. Dans cette méthode, on compare avant et après le serrage la différence de position entre le sommet de la pige et le sommet du boulon au moyen d'un palpeur. Cette méthode est chère, limitée au contrôle individuel des tiges et nécessite le plus souvent de démonter le dispositif de mise en tension pour procéder à l'étape de contrôle. Une autre méthode consiste à placer avant et après la mise en précontrainte, une sonde ultrasons sur la tige de boulon. Cette méthode nécessite un personnel spécialisé et doit être appliquée sur chaque boulon. Cela est onéreux. Une autre méthode consiste à équiper les boulons d'une rondelle-capteur apte à mesurer les efforts dans le boulon. Ce moyen de contrôle reste à demeure sur le boulon à contrôler.

Le document DE 28 46 668 décrit un instrument de mesure d'élongation pour dispositif de serrage d'un goujon. Le goujon présente un alésage axial traversé par une pige de mesure. La pige de mesure est en butée par son extrémité sur un écrou fixé dans la partie inférieure du goujon. Un instrument de mesure d'élongation est disposé en haut de la pige et prend appui sur la face haute du goujon. Un tel procédé de contrôle de la précontrainte présente l'inconvénient de dépendre de goujons spécifiques qui doivent être équipés d'une pige de mesure les traversant. Cela réduit la section utile du ou des goujons. Il est souhaitable de pouvoir contrôler la précontrainte établie dans un ou plusieurs goujons standard.

L'invention propose un procédé et un dispositif d'établissement et de contrôle de la précontrainte de serrage d'au moins une tige qui remédie à au moins un des problèmes précédents.

Un but de l'invention est de permettre un contrôle rapide, et d'assurer la détection des tiges standard insuffisamment précontraintes.

Le procédé et le dispositif de contrôle de l'invention visent en particulier à contrôler la précontrainte de tiges ou de goujons standards, ou à éviter de devoir retendre la tige spécifiquement pour le contrôle, ou de démonter le dispositif de mise en précontrainte, ou à recourir après l'établissement de la précontrainte à un moyen de contrôle cher.

Dans le cas de mise en oeuvre sur plusieurs tiges à contrôler, le procédé et le dispositif de contrôle de l'invention visent à être compatible avec un procédé d'établissement simultané de la précontrainte des tiges de boulons et vise un contrôle global de l'ensemble des tiges.

Selon un mode de réalisation, l'invention concerne un procédé d'établissement et de contrôle de la précontrainte axiale d'une portion de serrage d'au moins une tige de type vis ou goujon. L'établissement de la précontrainte comporte une étape de mise sous tension d'une portion d'extension de la tige comprenant la portion de serrage, à l'aide d'un organe de préhension de la tige et d'un tendeur. Le procédé de contrôle comprend une étape où, avant établissement de la précontrainte, on amène le tendeur dans une configuration de repos et on accoste l'organe de préhension contre le tendeur en configuration de repos et une étape où, après établissement de la précontrainte, on ramène le tendeur dans ladite configuration de repos et on plaque le tendeur en configuration de repos vers l'une des extrémités de la portion d'extension et on compare, par rapport à un seuil, la différence entre la longueur initiale et la longueur finale de la portion d'extension.

L'établissement de la précontrainte de tension peut se faire par exemple par tensionnement hydraulique. D'une manière générale, on utilise pour contrôler la précontrainte de la tige, des organes qui sont nécessaires pour établir la précontrainte à contrôler. Grâce à l'étape d'accostage initial du moyen de préhension, la configuration de repos du tendeur sert de témoin, après l'établissement de la précontrainte, de ce qu'était initialement la longueur de la portion d'extension. En effet, les extrémités de la portion d'extension sont reliées au tendeur par une chaîne d'organes de transmission d'effort qui, grâce à l'accostage, est sans jeu initial. Après établissement de la précontrainte, l'organe de préhension reste fixé au même endroit sur la tige à contrôler. En raison de la précontrainte de la portion de serrage, la portion d'extension s'est allongée. En revenant en configuration de repos, un jeu apparaît dans la chaîne d'organes de transmission d'efforts. Grâce à l'étape de plaquage du tendeur au repos, ce jeu apparaît à un seul endroit pour chaque tige à contrôler. Ce jeu est directement représentatif de la contrainte de serrage. Grâce à l'utilisation, pour le contrôle de la précontrainte, des organes ayant servi à établir cette précontrainte, les phases d'établissement de la précontrainte et son contrôle sont fortement intégrées. La durée du contrôle est réduite et peut avoir lieu n'importe quand après l'établissement de la précontrainte. Il n'est pas nécessaire de démonter les moyens de précontrainte de sorte que, si le résultat de contrôle fait apparaître une tige insuffisamment précontrainte, il est possible de provoquer une nouvelle fois cette précontrainte et de la contrôler à nouveau. Il n'est pas nécessaire de faire appel à des moyens de contrôle complexes dans leur mise en oeuvre tels que des sondes ultrasons ou à des moyens chers tels que des boulons pigés.

Avantageusement, on mesure la différence entre la longueur finale et la longueur initiale de la portion d'extension de chaque tige. Le fait de mesurer la différence de longueur que subit chaque portion d'extension des tiges, permet de connaître la valeur de la précontrainte axiale et d'identifier si une tige a été insuffisamment ou trop précontrainte.

Selon une variante, le procédé est destiné au contrôle d'au moins deux tiges comportant chacune une portion de serrage de même longueur. On identifie la tige présentant la plus petite différence entre la longueur finale et la longueur initiale correspondante, de façon à identifier la tige de précontrainte minimum. Cela permet à un opérateur d'aller vérifier plus particulièrement une tige, pour y détecter une anomalie.

Selon une autre variante, le procédé est destiné au contrôle de la précontrainte de serrage d'au moins trois tiges parallèles comportant des portions de serrage de même longueur. L'établissement de la précontrainte utilise des organes de préhension des tiges situés à l'une des extrémités des portions d'extension des tiges, les positions relatives des autres extrémités des portions d'extension n'étant pas modifiées par l'établissement de la précontrainte. Le procédé de contrôle comprend une étape où, avant établissement de la précontrainte, les organes de préhension sont accostés sur une surface de référence du tendeur en position initiale et une étape, après établissement de la précontrainte, où on plaque la surface de référence en une position finale contre au moins trois des organes de préhension, et on mesure, en au moins trois points de mesure, la distance entre la position initiale et la position finale de la surface de référence. Cette variante présente l'avantage d'un contrôle global de toutes les tiges en une seule séquence. Avec un jeu de trois capteurs, par exemple, on peut contrôler l'élongation d'une multitude de goujons serrés simultanément. Ceci est particulièrement intéressant pour les serrages de bride utilisant de nombreux boulons.

Avantageusement, on calcule pour chaque tige en fonction des distances mesurées, une différence minimale entre la longueur finale et la longueur initiale de la portion d'extension de la tige.

Selon un autre aspect de l'invention, celle-ci concerne un dispositif d'établissement et de contrôle de la précontrainte axiale d'au moins une tige lors d'un serrage d'une pièce. Le dispositif comprend, pour la tige à contrôler, un organe de préhension situé sur la tige et un tendeur muni d'un corps et d'un piston. Le tendeur comprend une surface d'appui du piston contre une surface complémentaire de l'organe de préhension et une surface d'appui du corps de tendeur contre une surface complémentaire de la pièce à serrer, ledit tendeur présentant une configuration de repos dans laquelle les surfaces d'appui sont fixes l'une par rapport à l'autre et destinées, hors de la configuration de repos, à mettre sous tension la tige. Le dispositif comprend un moyen de plaquage de l'une des surfaces d'appui du tendeur contre la surface complémentaire correspondante et un moyen de comparaison de la distance entre l'autre surface d'appui du tendeur au repos et la surface complémentaire correspondante, à un seuil.

Le fait que les surfaces d'appui du tendeur soient aptes, hors de la configuration de repos, à mettre la tige sous tension, permet de faire coïncider la configuration de repos du tendeur avec une configuration initiale avant l'établissement de la précontrainte dans la tige. Après l'établissement de la précontrainte, le retour du tendeur à sa configuration de repos, permet de matérialiser la configuration initiale. La différence entre la distance initiale entre les deux surfaces complémentaires et la distance finale correspond à l'allongement de la tige. Cet allongement est dû à la partie de la tige soumise à une précontrainte de serrage. Le moyen de plaquage du tendeur permet de palper la longueur finale entre les deux surfaces complémentaires. Le moyen de comparaison, compare la différence entre les longueurs finales et initiales séparant les deux surfaces complémentaires, à un seuil représentant un allongement insuffisant. Le fait que les pièces servant à palper la longueur finale de la portion d'extension servent aussi à établir la précontrainte, permet au contrôle d'être effectué sans démonter les pièces servant à la mise sous tension. Le moyen de plaquage peut par exemple être constitué de vérins pneumatiques ou de dispositifs à ressorts et le moyen de comparaison de capteurs de déplacement inductifs ou potentiométriques. Le moyen de plaquage est choisi en fonction des efforts en jeu de manière que son action ne vienne introduire que des déformations infimes. La précision du moyen de mesure est déterminée en fonction de la précision requise pour la mesure de la précontrainte des tiges de boulons.

Avantageusement, le moyen de plaquage est apte à plaquer l'une des surfaces d'appui du tendeur contre la surface complémentaire correspondante, tout en laissant l'organe de préhension fixe par rapport aux tiges.

Avantageusement, le tendeur comprend un vérin hydraulique. Cela présente l'avantage pour le contrôle qu'il suffit de vérifier une précontrainte minimale. En effet, pour une pression d'huile donnée, et une géométrie connue de vérin, l'effort d'extension maximum exercé est connu. Les aléas, tels des frottements ou des mésalignements de composants, ne peuvent avoir comme effet que d'amoindrir la précontrainte établie dans la tige.

Selon une variante, le dispositif est destiné au contrôle simultané de la précontrainte de serrage d'une pluralité de tiges parallèles sur des portions de serrage de même longueur. Le dispositif comprend un corps de tendeur commun aux tiges à contrôler et une pluralité de pistons correspondant aux tiges. Le moyen de mesure est apte à mesurer, en au moins trois points de mesure, la distance entre la surface d'appui du corps du tendeur et la pièce à serrer.

Avantageusement, le dispositif comprend un moyen de calcul apte à localiser, en fonction des, au moins trois, distances mesurées, la tige la moins tendue.

Avantageusement, le tendeur présente une configuration de repos où les pistons correspondant aux tiges à contrôler sont immobilisés par des butées internes du corps de tendeur, une surface de référence du tendeur étant définie par la pluralité des surfaces d'appuis des pistons au repos ; les organes de préhension des tiges à contrôler étant destinés à être accostés, avant l'établissement de la précontrainte, contre la surface de référence du tendeur; le moyen de plaquage étant apte, après établissement de la précontrainte, à plaquer la surface de référence du tendeur contre au moins trois organes de préhension de contact.

Selon une autre variante, le corps de tendeur présente une forme globale annulaire et dans lequel les tiges à contrôler sont réparties autour d'un cercle et sont parallèles à l'axe de la forme annulaire. Ce type de dispositif est particulièrement avantageux pour le contrôle de serrage de brides circulaire.

Avantageusement, la surface d'appui du corps de tendeur sur la pièce présente une forme globale de couronne ; le moyen de plaquage prenant appui sur la pièce à serrer et étant apte à déplacer le corps annulaire du tendeur en trois points de support répartis sur la couronne. Ce type de dispositif tire partie du fait que la probabilité qu'il y ait deux tiges insuffisamment précontraintes, à deux endroits éloignées de la couronne est beaucoup plus faible que la probabilité d'avoir une seule tige insuffisamment précontrainte, et ceci même pour un nombre élevé de boulons. Ainsi, lors de la mesure, toute inclinaison de la couronne constatée dans une direction donnée a beaucoup plus de chance de provenir d'un boulon insuffisamment précontraint dans ladite direction que de plusieurs boulons provoquant, comme résultante, ladite inclinaison. Dans le cas où cette inclinaison provient de plusieurs boulons insuffisamment serrés, la recherche des boulons concernés est possible avec le procédé de l'invention et prend un peu plus de temps que quand il ne s'agit que d'un seul boulon.

D'autres caractéristiques et avantages de l'invention apparaîtront à la lecture de la description détaillée de plusieurs modes de réalisation du dispositif pris à titre d'exemples non limitatifs et illustrés par les dessins annexés, sur lesquels :
- la figure 1 est une coupe, selon le plan I-I de la figure 6, d'un dispositif servant à précontraindre et à contrôler la précontrainte d'une tige de serrage d'une bride circulaire. Cette coupe illustre le dispositif en configuration de repos correspondant à une configuration initiale avant établissement de la précontrainte de la tige ;
- la figure 2 est une demi-coupe du dispositif en configuration d'extension ;
- la figure 3 est une demi-coupe du dispositif après accostage de l'écrou de serrage ;
- la figure 4 est une demi-coupe du dispositif après relâchement de la tige ;
- la figure 5 est une demi-coupe du dispositif après plaquage du tendeur contre les organes de préhension ;
- la figure 6 est une vue de dessus du dispositif ; et
- la figure 7 est une représentation schématique des mouvements de la surface d'appui du corps de tendeur et de la surface de référence du tendeur lors des opérations globales de contrôle et de précontrainte de la pluralité de tiges.

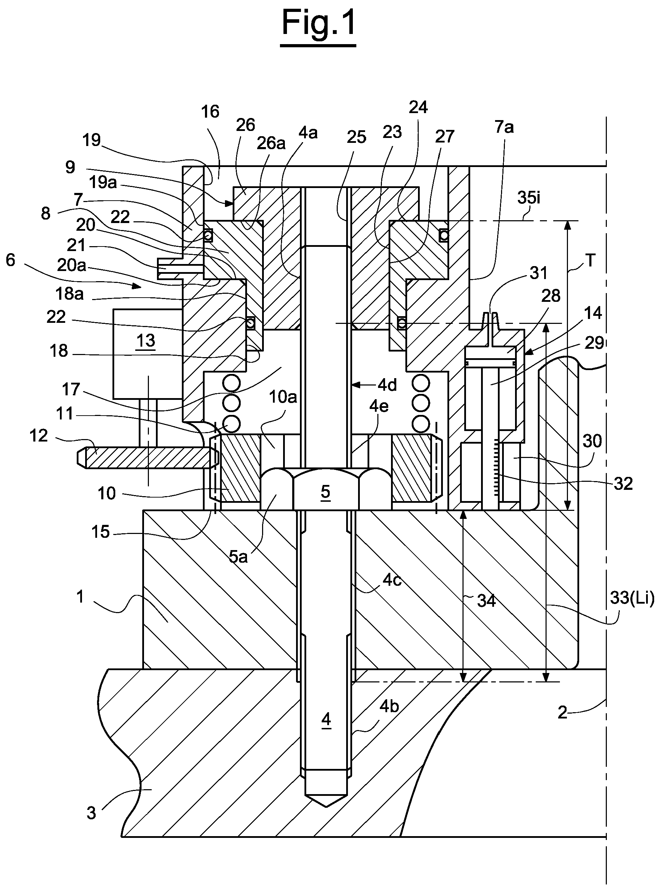

Comme illustré sur la figure 1, une bride circulaire 1 d'axe 2 est fixée sur un bâti 3 par une pluralité de goujons 4 dont un seul est représenté sur la figure 1, et par des écrous de serrage 5 correspondant à chaque goujon 4. Un tendeur 6 comprend un corps de tendeur 7 et autant de pistons 8 que de goujons 4 à serrer.

Dans une variante, le tendeur 6 est un ensemble rigide comprenant autant de tendeurs unitaires que de goujons à serrer. Chaque tendeur unitaire comprend un cylindre et un piston 8.

Le dispositif de contrôle et d'établissement de la précontrainte comprend également un moyen de préhension 9 pour chacun des goujons 4 à serrer, ainsi que, pour chaque écrou de serrage hexagonal 5, une roue d'accostage 10 plaquée contre l'écrou de serrage 5 par un ressort 11 et entraînée par une roue d'entraînement 12 et un moteur d'accostage 13. Le dispositif comprend également un moyen de plaquage et de mesure 14.

Le corps de tendeur 7 présente une forme annulaire de même axe 2 que la bride circulaire 1 à serrer, et repose sur la bride circulaire 1 par une surface d'appui 15 en forme globale de couronne. Le corps de tendeur 7 comprend une pluralité de logements 16, présentant chacun une forme de révolution autour d'un axe destiné à coïncider avec l'axe des tiges de chacun des goujons 4 et perpendiculaire à la surface d'appui 15. Les logements 16 comprennent le long de leur axe une cavité proximale 17 située axialement proche de la surface d'appui 15, puis un alésage 18 situé axialement dans une portion centrale et un alésage 19 situé axialement dans une portion distale du corps de tendeur 7, concentrique à l'alésage 18 et raccordé à l'alésage 18 par un épaulement 20. L'alésage 19 est d'un diamètre supérieur à l'alésage 18. Le corps de tendeur 7 comprend également un conduit radial 21, débouchant dans le logement 16 à proximité de l'épaulement 20.

Le piston 8 présente deux diamètres extérieurs 18a et 19a ajustés aux alésages 18 et 19, ainsi qu'un épaulement 20a correspondant à l'épaulement 20. Les diamètres extérieurs 18a et 19a comprennent des gorges munies de joints d'étanchéité 22, situées axialement de part et d'autre du conduit 21 destiné à recevoir de l'huile sous pression. Chaque piston 8 comprend un alésage interne 23 et une surface d'appui axiale 24.

Le moyen de préhension 9 présente un filetage intérieur 25, correspondant au filetage d'une partie distale 4a du goujon 4. Le moyen de préhension 9 comprend également un rebord 26 s'étendant radialement de manière à reposer sur la surface d'appui 24 par une surface complémentaire 26a du rebord 26. Le moyen de préhension 9 comprend également un diamètre de guidage 27, destiné à coopérer avec l'alésage 23 du piston 8.

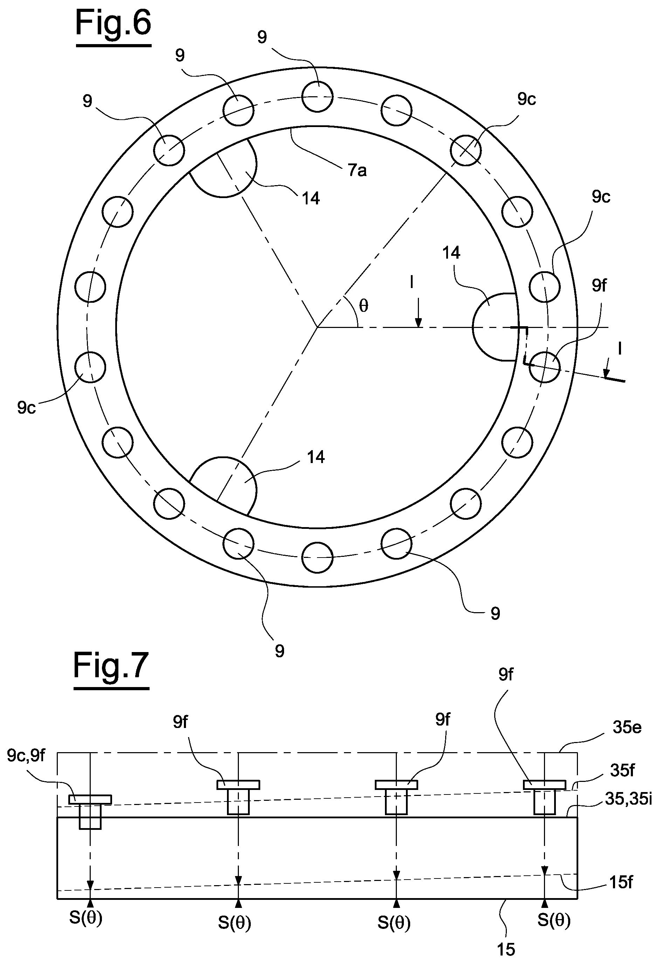

Le dispositif comprend au moins trois moyens de plaquage et de mesure 14, situés sur un flanc intérieur 7a du corps de tendeur 7 et répartis de manière équidistante autour de la couronne que forme le corps de tendeur 7 (visible en figure 6). Le moyen 14, illustré en figure 1, comprend une cavité 28, un piston 29 et un dispositif de lecture optique 30. La cavité est reliée à un conduit pneumatique par un canal 31 débouchant dans la cavité 28. Le piston 29 est muni dans une partie faisant saillie de la cavité 28, de réseaux gravés 32 détectables par le dispositif de lecture optique 30. Alternativement, le moyen de mesure peut comprendre des comparateurs analogiques à cadrans. Ces comparateurs sont bons marchés, ne sont pas raccordables à un moyen de calcul et conviennent pour un nombre réduit de boulons à contrôler.

Le goujon 4 présente un filetage de base 4b, destiné à être vissé à force dans le bâti 3, une partie lisse 4c traversant la bride circulaire 1 et un deuxième filetage 4d comprenant une partie proximale 4e proche de la surface d'appui du corps 15 et destinée à recevoir l'écrou de serrage 5 et la partie distale 4a destinée à recevoir le moyen de préhension 9.

Dans une variante, l'écrou de serrage 5 est de forme cylindrique, muni par exemple de six trous radiaux. Un opérateur enfile, dans l'un des trous radiaux une tête d'extrémité d'une clé à déclenchement. L'opérateur visse l'écrou de serrage 5 sue un sixième de tour et recherche le trou radial suivant jusqu'au déclenchement de la clé. La clé permet de procéder à l'accostage de l'écrou 5 de manière reproductible sans pour autant introduire de contrainte de torsion dans la tige 4. L'écrou cylindrique peut alternativement être muni de dentures ou de crans pour un accostage motorisé.

Dans une variante, le moyen de plaquage est intégré dans le corps 7 du tendeur 6. Le moyen de mesure 30, de type inductif par exemple, est dissocié du moyen de plaquage.

On va maintenant décrire, à l'aide des figures 1 à 5, le fonctionnement du dispositif de mise en précontrainte du goujon 4 et de contrôle de la précontrainte. Par ordres successifs des étapes, la pluralité de goujons 4 est vissée à force dans le bâti 3, la bride circulaire 1 est enfilée sur les goujons 4 jusqu'en contact avec le bâti 3, l'écrou de serrage 5 est vissé sur la partie proximale 4e du goujon 4, le tendeur 6 est enfilé autour de la bride 1, de manière que les pistons 8 reçoivent les goujons 4. Le dispositif est ensuite amené dans une configuration initiale (figure 1), dans laquelle le tendeur 6 est amené dans une configuration de repos où l'ensemble des épaulements 20a de chacune des pistons 8 sont en contact avec l'épaulement 20 du corps 7 de tendeur. Chacun des organes de préhension 9 est vissé sur la partie distale du goujon 4 correspondant jusqu'à ce que le rebord 26 soit en contact avec la surface d'appui 24 du piston 8 correspondant.

Le piston 29 de chacun des moyens 14 de plaquage et de mesure est amené dans une position rentrée à l'intérieur de la cavité 28, de manière à ne pas faire saillie de la surface d'appui 15 du corps de tendeur 7 qui est en appui sur la bride circulaire 1. Dans cette configuration initiale, les surfaces d'appui 15 et 24 du tendeur 6 sont en contact avec les surfaces complémentaires correspondantes et aucun des goujons 4 ne subit de contraintes axiales. Le goujon 4 présente alors une portion d'extension 33 destinée à être étirée, s'étendant en première approximation depuis le moyen de préhension 9 jusqu'au bâti 3. Durant cette configuration initiale, la portion d'extension 33 présente une longueur initiale « Li ».

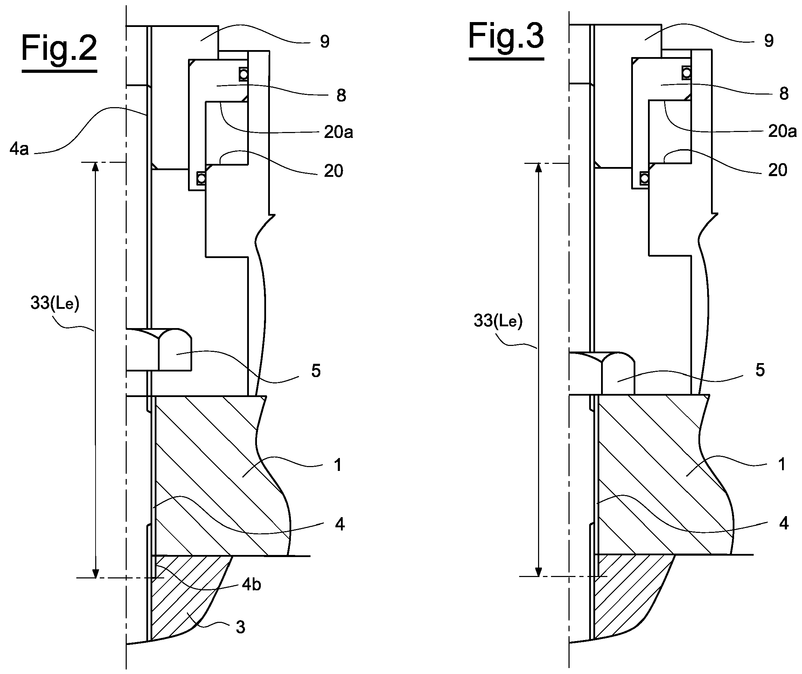

Comme illustré en figure 2, de l'huile sous pression est ensuite introduite par chacun des conduits 21 entre les épaulements 20 et 20a de chacune des pistons. Grâce aux joints d'étanchéité 22, le piston 8 s'écarte du plan d'appui 15 du corps de tendeur 7 et soulève en même temps le moyen de préhension 9. L'effort de tension auquel est soumis le goujon 4 est sensiblement constant entre les deux extrémités filetées 4a et 4b. La contrainte axiale à laquelle est soumis le matériau du goujon 4 décroît progressivement à l'intérieur de la partie distale le long des premiers filets du filetage 25. Il en est de même pour la contrainte axiale subie par le filetage de base 4b du goujon 4. La contrainte décroît progressivement dès les premiers filets du bâti 3. La portion d'extension 33 présente une longueur étendue « Le ».

Le moteur d'accostage 13, illustré en figure 1, entraîne en rotation la roue d'entraînement 12, qui engrène avec une denture de la roue d'accostage 10. La roue d'accostage 10 pivote autour de l'axe du goujon 4 jusqu'à ce qu'un logement hexagonal 10a arrive angulairement en coïncidence avec six pans complémentaires 5a de l'écrou de serrage 5. Le ressort 11 pousse la roue d'accostage 10, qui vient coiffer l'écrou de serrage 5. Des dentures de la roue d'entraînement 12 coulissent le long de dentures complémentaires de la roue d'accostage 10. Le couple exercé par le moteur d'accostage 13 permet d'entraîner en rotation l'écrou de serrage 5 jusqu'à ce que celui-ci accoste la bride circulaire 1. Le moteur 13 est par exemple un moteur électrique, de sorte que lorsque l'écrou de serrage 5 arrive en contact avec la bride circulaire 1, le frottement de l'écrou sur la bride 1 et sur le filetage 4d du goujon 4 augmente soudainement ainsi que le courant électrique d'alimentation du moteur 13. Un dispositif d'interruption permet d'interrompre l'entraînement du moteur 13 dès que l'écrou de serrage 5 a accosté sur la bride 1. Le moteur d'entraînement 13 n'a pas comme effet d'augmenter de manière significative la tension du goujon 4. Le moteur 13 permet de positionner de manière répétitive l'écrou de serrage 5 en contact avec la bride 1 pendant que le goujon 4 est tendu sur toute sa portion d'extension 33, sous l'effet de l'huile hydraulique sous pression (voir figure 3).

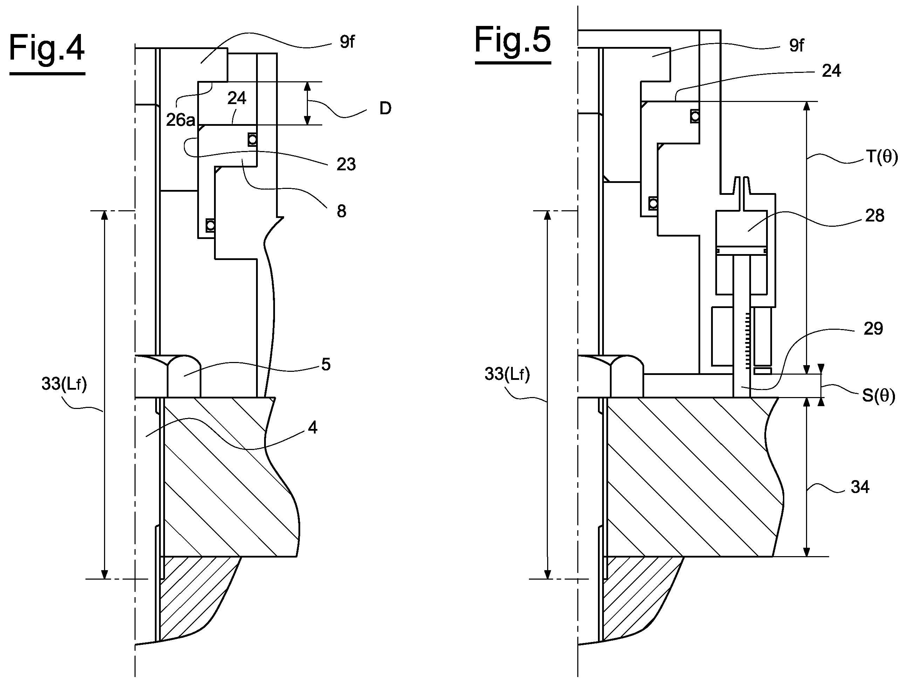

La pression hydraulique est ensuite relâchée (voir figure 4) et chacun des pistons 8 du tendeur 6 revient dans sa position initiale, immobilisés par le contact entre l'épaulement 20a du piston 8 et l'épaulement 20 correspondant du corps 7 de tendeur. Le moyen de préhension 9 reste fixé sur la partie distale 4a du goujon 4, coulisse dans l'alésage 23 du piston 8 correspondant et prend une position finale « 9f ». La partie de goujon 4 comprise entre l'écrou de serrage 5 et le moyen de préhension 9 est détendue, tandis que la partie 4c du goujon 4 traversant la bride circulaire 1 est bloquée à l'état tendu par l'écrou de serrage 5. La portion d'extension 33 présente une longueur finale « Lf » après relâchement, plus réduite que la longueur étendue « Le ». Cette longueur finale de la portion d'extension 33 est néanmoins plus longue que la longueur initiale « Li » de cette même portion d'extension 33, en raison de l'état tendu d'une portion de serrage 34 compris entre l'écrou de serrage 5 et le bâti 3. Si la surface d'appui 15 du tendeur 6 reste en contact avec le bâti 3, la distance entre la surface d'appui 24 du piston 8 et la surface complémentaire 26a du moyen de préhension 9 est égale à l'allongement qu'a subi la portion de serrage 34 au cours de la mise sous tension.

Dans une variante, l'allongement de la portion de serrage 34 d'un goujon donné peut être directement mesuré par un capteur, ce qui permet de renseigner sur la précontrainte axiale résiduelle dans la portion de serrage 34. Cette variante impose un moyen de mesure ou une opération de mesure pour chacun des goujons.

Selon la forme de la bride 1 et du corps de tendeur 7, il se peut que la compression de la bride 1 par l'écrou 5 déforme la surface de la bride 1 sur laquelle s'appuie la surface d'appui 15 du corps de tendeur 7. Dans ce cas, la distance entre la surface d'appui 24 du piston 8 et la surface complémentaire 26a du moyen de préhension 9 intègre la déformation de la bride 1 comprimée à l'endroit du tendeur 7. Cependant, cette éventuelle déformation de la bride 1, ainsi que toute déformation de la structure serrée, sont généralement du second ordre par rapport à l'allongement de la tige 4. De plus, ces déformations sont connues avec précision, soit par calcul, soit par expérimentation initiale. Si la valeur totale de ces déformations est jugée significative, cette valeur peut être déduite systématiquement des mesures effectuées de façon à mesurer effectivement l'allongement de la portion de serrage 34 de la tige 4.

Comme illustré sur les figures 5 et 6, de l'air sous pression est introduit dans la cavité 28 pour pousser le piston 29 de manière à plaquer l'ensemble du tendeur vers le haut de la figure 5.

La bride 1 présente une épaisseur constante, de sorte que les longueurs « LS » des portions de serrage 34 de chacun des goujons 4 sont sensiblement identiques. En revanche, la distance « T_{θ} » séparant la surface d'appui 15 de chacune des surfaces d'appui 24 des pistons 8 en appui sur l'épaulement 20 peut varier en fonction de la position angulaire θ de la tige de goujon 4 considérée, sans que cela affecte la précision du contrôle. La longueur initiale « Li_{θ} » de la portion d'extension 33 d'un goujon donné est égale à la somme de la longueur « LS » de la portion de serrage 34 de ce goujon, plus la distance « T_{θ} ». Li_{θ} = LS+T_{θ}

La distance « T_{θ} » est une distance prise en configuration de repos. Elle est identique en configuration initiale de repos avant mise en tension, et en configuration finale de repos après accostage de l'écrou 5 et relâchement de ladite tige. L'ensemble des surfaces d'appui 24 de chacun des pistons 8 au repos se répartit sur une surface de référence 35 fictive et fixe par rapport au tendeur 6. Sous l'effet des trois moyens de plaquage 14, la surface de référence 35 se déplace avec le tendeur 6.

La figure 7 illustre le déplacement de la surface d'appui 15 et de la surface de référence 35 au cours des phases de mise en précontrainte et de contrôle global de l'ensemble des tiges de goujons 4. Dans la configuration initiale, la surface 15 est en appui sur la bride 1 et la surface 35 est dans une position initiale 35i. Lors de la mise sous tension des tiges de goujons 4, la surface 35 se déplace dans une position 35e parallèle à la surface 15. Après accostage des écrous de serrage 5, non représentés sur la figure 7, et relâchement des tiges de goujons 4, les organes de préhension 9 sont dans une position finale 9f et la surface 35 revient en position initiale 35i. Sous l'action des trois pistons pneumatiques 29, la surface 15 est soulevée en position 15f et la surface 35 prend une position de plaquage 35f, dans laquelle au moins trois surfaces 24 des pistons 8 sont en contact avec trois écrous de contact 9c pris parmi les écrous en position finale 9f.

En fonction des trois valeurs de déplacement des trois pistons 29, un calculateur, non représenté, calcule la distance de soulèvement S_{θ} entre la surface 15i et la surface 15f à l'endroit de chaque position θ des tiges de goujons 4. Pour les tiges de position angulaire θ correspondant aux organes de préhension de contact 9c, la longueur finale « Lf_{θ} » de la portion d'extension 33 est égale à la somme de la longueur LS de la portion de serrage, plus de la distance fixe T_{θ} du tendeur 6, et de la distance de soulèvement calculée S_{θ}. Pour les tiges correspondant à des organes de préhension dont la position finale 9f n'est pas en contact avec l'un des pistons 8 du tendeur, la longueur finale « Lf_{θ} » est supérieure à la somme ci-dessus. Pour toutes les tiges de goujons, on a : Lf_{θ}≥LS+T_{θ}+S_{θ}, d'où Lf_{θ}-Li_{θ}>S_{θ}.

Le dispositif et le procédé de contrôle permettent avec trois mesures seulement de déterminer une extension minimale subie par chacune des tiges de goujons 4. Si cette extension est insuffisante, l'opérateur peut relancer un cycle de mise en tension, un nouvel accostage et un nouveau contrôle. De plus, l'opérateur sait à quelle position angulaire se trouve la tige présentant un serrage potentiellement insuffisant et peut observer une éventuelle anomalie.

Dans une variante, le dispositif possède plus que trois moyens de plaquage et de mesure 14. Cela permet aux moyens de calcul de déterminer plusieurs valeurs possibles S_{θ} et d'en faire la moyenne. Si le nombre de moyens de mesure 14 est suffisant, il est possible de s'affranchir d'un calculateur. La tige susceptible d'être insuffisamment tendue est alors située au voisinage du moyen de mesure 14 correspondant à la plus petite distance de soulèvement mesurée.

Dans une autre variante, les moyens de plaquage 28, 29, sont dissociés des moyens de mesure 29, 30. Il peut y avoir par exemple trois moyens de plaquage et huit moyens de mesure.

L'avantage d'un moyen de plaquage pneumatique est que l'on peut interrompre son actionnement et que l'effort mis en jeu reste faible par rapport aux efforts de mise en tension des tiges par des vérins hydrauliques. Cependant, n'importe quel actionneur convient, tel qu'un pied animé par un moteur électrique ou un ressort avec un dispositif d'armement et de désarmement. Il est aussi possible d'utiliser des vérins hydrauliques. Le choix de tel ou tel moyen de plaquage ou de mesure dépend notamment de la taille de la bride 1 à serrer et surtout de la position horizontale ou verticale de l'axe 2. Si les parties distales 4a des goujons 4 sont orientées vers le bas, la pesanteur peut suffire à plaquer le tendeur au repos sur les organes de préhension en position finale 9f. En revanche, un moyen de plaquage de la surface 15 du corps de tendeur 7 sur la bride 1 peut être nécessaire pour assurer l'accostage initial des organes de préhension 9 sur les pistons 8 de tendeur au repos.

Dans une autre variante, la pièce à serrer est un assemblage d'une bride et d'un bâti serrés entre une tête de vis et un écrou de serrage 5.

Un des avantages de l'invention est que la précision de mesure est indépendante de la qualité de l'accostage initial des organes de préhension 9 sur les pistons 8 en position de repos.

Un autre avantage de l'invention est que la différence entre la longueur initiale et la longueur finale mesurée est directement représentative de l'état de la tension dans la portion de serrage, et ceci indépendamment de la souplesse des moyens de retenue que sont l'écrou de serrage 5, les filetages 4b du goujon dans le bâti ou de la tête de vis.

Les distances S_{θ} correspondant à chaque tige de goujons 4, peuvent être mesurées ou calculées entre la surface 15f en position finale et la surface 15 en position initiale, ou bien entre la surface 35f en position finale et la surface 35i en position initiale. Les organes de préhension étant d'une raideur bien supérieure à celle de la tige de goujons 4, la différence de longueur S_{θ} correspond également au déplacement entre les configurations initiales et finales de l'extrémité mobile 4a de la portion d'extension 33 de chacune des tiges de goujons 4.

## Revendications

1. Procédé d'établissement et de contrôle de la précontrainte axiale d'une portion de serrage (34) d'au moins une tige de type vis ou goujon (4), l'établissement de la précontrainte comportant une étape de mise sous tension d'une portion d'extension (33) de la tige (4) comprenant la portion de serrage (34), à l'aide d'un organe (9) de préhension de la tige (4) et d'un tendeur (6); **caractérisé par le fait que** le procédé de contrôle comprend une étape où, avant établissement de la précontrainte, on amène le tendeur dans une configuration de repos où le tendeur présente une longueur initiale (T, T(θ)) entre une première surface d'appui (24) et une seconde surface d'appui (15) et on accoste l'organe de préhension (9) contre la première surface d'appui (24) du tendeur (6) en configuration de repos, puis une étape où, après établissement de la précontrainte, on ramène le tendeur (6) à sa longueur initiale (T, T(θ)) dans ladite configuration de repos, et, l'organe de préhension étant toujours fixé au même endroit de la tige à contrôler, on plaque le tendeur en configuration de repos vers l'une des extrémités de la portion d'extension (33) jusqu'à ce qu'il soit en butée du côté de sa première surface d'appui (24) et on compare, par rapport à un seuil, le déplacement (S(θ)) de la seconde surface d'appui (15) du tendeur (6) entre sa position lors de la phase d'accostage et sa position lors de la phase de placage.

2. Procédé selon la revendication 1, dans lequel on évalue le déplacement de la seconde surface d'appui (24) du tendeur au droit de plusieurs tiges précontraintes par ce tendeur, pour estimer une différence minimale entre la longueur finale (Lf_{θ}) et la longueur initiale (Li_{θ}) de la portion d'extension (33) de chaque tige.

3. Procédé selon la revendication 1 ou 2, destiné au contrôle d'au moins deux tiges comportant chacune une portion de serrage (34) de même longueur, dans lequel on identifie la tige présentant la plus petite différence entre la longueur finale (Lf_{θ}) et la longueur initiale (Li_{θ}) correspondante, de façon à identifier la tige de précontrainte minimum.

4. Procédé selon l'une quelconque des revendications 1 à 3, destiné au contrôle de la précontrainte de serrage d'au moins trois tiges parallèles comportant des portions de serrage (34) de même longueur, l'établissement de la précontrainte utilisant des organes de préhension des tiges situés à l'une des extrémités des portions d'extension (33) des tiges (4), les positions relatives des autres extrémités des portions d'extension (33) n'étant pas modifiées par l'établissement de la précontrainte, le procédé de contrôle comprenant une étape où, avant établissement de la précontrainte, les organes de préhension (9) sont accostés sur une surface de référence (35) du tendeur (6) en position initiale (35i) et dans lequel, après établissement de la précontrainte, on plaque la surface de référence (35) en une position finale (35f) contre au moins trois des organes de préhension (9f), et on mesure, en au moins trois points de mesure, la distance entre la position initiale (35i) et la position finale (35f) de la surface de référence (35).

5. Procédé selon la revendication 4, dans lequel on calcule pour chaque tige en fonction des distances mesurées, une différence minimale (S_{θ}) entre la longueur finale (Lf_{θ}) et la longueur initiale (Li_{θ}) de la portion d'extension (33) de la tige.

6. Dispositif d'établissement et de contrôle de la précontrainte axiale d'au moins une tige (4) lors d'un serrage d'une pièce (1), le dispositif comprenant, pour la tige à contrôler (4), un organe de préhension (9) situé sur la tige (4) et un tendeur (6) muni d'un corps (7) et d'un piston (8); ledit tendeur (6) comprenant une première surface d'appui (24) du piston (8) contre une surface complémentaire (26a) de l'organe de préhension (9) et une seconde surface d'appui (15) du corps (7) de tendeur (6) contre une surface complémentaire de la pièce (1) à serrer ; ledit tendeur (6) présentant une configuration de repos dans laquelle les surfaces d'appui (24, 15) sont fixes l'une par rapport à l'autre et destinées, hors de la configuration de repos, à mettre sous tension la tige (4), **caractérisé par le fait qu'**il comprend un moyen d'accostage de l'organe de préhension (9) contre la première surface d'appui (24) du tendeur (6) en configuration de repos, un moyen de plaquage (28-29) de la première surface d'appui (24) du tendeur (6) contre la surface complémentaire correspondante (26a), tout en laissant l'organe de préhension (9) fixe par rapport à la tige (4) et un moyen de comparaison (29-30), par rapport à un seuil, du déplacement (Se) de la seconde surface d'appui (15) du tendeur (6) entre sa position lors de la phase d'accostage et sa position lors de la phase de placage..

7. Dispositif selon la revendication 6, destiné au contrôle simultané de la précontrainte de serrage d'une pluralité de tiges (4) parallèles sur des portions de serrage (34) de même longueur, le dispositif comprenant un corps (7) de tendeur commun aux tiges à contrôler (4), une pluralité de pistons (8) correspondant aux tiges (4), et un moyen de mesure (29-30) apte à mesurer, en au moins trois points géométrique de mesure distincts, les distances entre la surface d'appui (15f) du corps (7) du tendeur et la pièce (1) à serrer.

8. Dispositif selon la revendication 7, comprenant un moyen de calcul apte à localiser, en fonction des, au moins trois distances mesurées, la tige la moins tendue.

9. Dispositif selon la revendication 7 ou 8, dans lequel le tendeur présente une configuration de repos où les pistons (8) correspondant aux tiges à contrôler sont immobilisés par des butées internes (20) du corps (7) de tendeur (6), une surface de référence du tendeur étant définie par la pluralité des surfaces d'appuis des pistons au repos ; les organes de préhension (9) des tiges à contrôler étant destinés à être accosté, avant l'établissement de la précontrainte, contre la surface de référence du tendeur; le moyen de plaquage étant apte, après établissement de la précontrainte, à plaquer la surface de référence (35) du tendeur (6) contre au moins trois organes de préhension (9c) de contact.

10. Dispositif selon l'une quelconque des revendications 7 à 9, dans lequel le corps (7) de tendeur présente une forme globale annulaire et dans lequel les tiges (4) à contrôler sont réparties autour d'un cercle et sont parallèles à l'axe de la forme annulaire.

11. Dispositif selon la revendication 10, dans lequel la surface d'appui (15) du corps (7) de tendeur (6) sur la pièce (1) présente une forme globale de couronne ; le moyen de plaquage (28-29) prenant appui sur la pièce (1) à serrer et étant apte à déplacer le corps (7) annulaire du tendeur (6) en trois points de support répartis sur la couronne.

## Patentansprüche

1. Verfahren zum Aufbau und zur Steuerung der axialen Vorspannung eines Klemmabschnitts (34) mindestens einer Stange von der Art Schraube oder Bolzen (4), wobei der Aufbau der Vorspannung einen Schritt des Unterspannungsetzens eines Dehnungsabschnitts (33) der Stange (4), der den Klemmabschnitt (34) enthält, mit Hilfe eines Greiforgans (9) der Stange (4) und einer Spannschraube (6) aufweist; **dadurch gekennzeichnet, dass** das Steuerverfahren einen Schritt, in dem die Spannschraube vor dem Aufbau der Vorspannung in eine Ruhekonfiguration gebracht wird, in der die Spannschraube eine Anfangslänge (T, T(θ)) zwischen einer ersten Auflagefläche (24) und einer zweiten Auflagefläche (15) hat, und das Greiforgan (9) gegen die erste Auflagefläche (24) der Spannschraube (6) in der Ruhekonfiguration angelegt wird, dann einen Schritt enthält, in dem, nach dem Aufbau der Vorspannung, die Spannschraube (6) auf ihre Anfangslänge (T, T(θ)) in der Ruhekonfiguration zurückgebracht wird, und, während das Greiforgan immer noch an der gleichen Stelle der zu steuernden Stange befestigt ist, die Spannschraube in der Ruhekonfiguration zu einem der Enden des Dehnungsabschnitts (33) gepresst wird, bis sie auf der Seite ihrer ersten Auflagefläche (24) in Anschlag ist, und die Verschiebung (S(θ)) der zweiten Auflagefläche (15) der Spannschraube (6) zwischen ihrer Stellung in der Anlegephase und ihrer Stellung in der Anpressphase bezüglich einer Schwelle verglichen wird.

2. Verfahren nach Anspruch 1, wobei die Verschiebung der zweiten Auflagefläche (15) der Spannschraube vor mehreren durch diese Spannschraube vorgespannten Stangen ermittelt wird, um eine Mindestdifferenz zwischen der Endlänge (Lf_{θ}) und der Anfangslänge (Li_{θ}) des Dehnungsabschnitts (33) jeder Stange zu schätzen.

3. Verfahren nach Anspruch 1 oder 2, das zur Steuerung von mindestens zwei Stangen bestimmt ist, die je einen Klemmabschnitt (34) gleicher Länge aufweisen, wobei die Stange erkannt wird, die den kleinsten Unterschied zwischen der Endlänge (Lf_{θ}) und der entsprechenden Anfangslänge (Lie) aufweist, um die Stange mit Mindestvorspannung zu erkennen.

4. Verfahren nach einem der Ansprüche 1 bis 3, das zur Steuerung der Klemmvorspannung von mindestens drei parallelen Stangen bestimmt ist, die Klemmabschnitte (34) gleicher Länge aufweisen, wobei der Aufbau der Vorspannung Greiforgane der Stangen verwendet, die sich an einem der Enden der Dehnungsabschnitte (33) der Stangen (4) befinden, wobei die relativen Stellungen der anderen Enden der Dehnungsabschnitte (33) nicht durch den Aufbau der Vorspannung verändert werden, wobei das Steuerverfahren einen Schritt enthält, in dem vor dem Aufbau der Vorspannung die Greiforgane (9) auf eine Bezugsfläche (35) der Spannschraube (6) in Anfangsstellung (35i) angelegt werden, und wobei nach dem Aufbau der Vorspannung die Bezugsfläche (35) in einer Endstellung (35f) gegen mindestens drei der Greiforgane (9f) gepresst wird, und an mindestens drei Messpunkten der Abstand zwischen der Anfangsstellung (35i) und der Endstellung (35f) der Bezugsfläche (35) gemessen wird.

5. Verfahren nach Anspruch 4, wobei für jede Stange abhängig von den gemessenen Abständen ein Mindestunterschied (S_{θ}) zwischen der Endlänge (Lf_{θ}) und der Anfangslänge (Li_{θ}) des Dehnungsabschnitts (33) der Stange berechnet wird.

6. Vorrichtung zum Aufbau und zur Steuerung der axialen Vorspannung mindestens einer Stange (4) beim Klemmen eines Bauteils (1), wobei die Vorrichtung für die zu steuernde Stange (4) ein Greiforgan (9), das sich auf der Stange (4) befindet, und eine Spannschraube (6) enthält, die mit einem Körper (7) und mit einem Kolben (8) versehen ist; wobei die Spannschraube (6) eine erste Auflagefläche (24) des Kolbens (8) gegen eine komplementäre Fläche (26a) des Greiforgans (9) und eine zweite Auflagefläche (15) des Körpers (7) der Spannschraube (6) gegen eine komplementäre Fläche des zu klemmenden Bauteils (1) enthält; wobei die Spannschraube (6) eine Ruhekonfiguration aufweist, in der die Auflageflächen (24, 15) zueinander ortsfest und dazu bestimmt sind, außerhalb der Ruhekonfiguration die Stange (4) unter Spannung zu setzen, **dadurch gekennzeichnet, dass** sie eine Anlegeeinrichtung des Greiforgans (9) gegen die erste Auflagefläche (24) der Spannschraube (6) in der Ruhekonfiguration, eine Anpresseinrichtung (28-29) der ersten Auflagefläche (24) der Spannschraube (6) gegen die entsprechende komplementäre Fläche (26a), während das Greiforgan (9) bezüglich der Stange (4) ortsfest gelassen wird, und eine Vergleichseinrichtung (29-30), bezüglich einer Schwelle, der Verschiebung (S_{θ}) der zweiten Auflagefläche (15) der Spannschraube (6) zwischen ihrer Stellung in der Anlegephase und ihrer Stellung in der Anpressphase enthält.

7. Vorrichtung nach Anspruch 6, die zur gleichzeitigen Steuerung der Klemmvorspannung einer Vielzahl von parallelen Stangen (4) auf Klemmabschnitten (34) gleicher Länge bestimmt ist, wobei die Vorrichtung einen Spannschraubenkörper (7), der den zu steuernden Stangen (4) gemeinsam ist, eine Vielzahl von Kolben (8) entsprechend den Stangen (4), und eine Messeinrichtung (29-30) enthält, die an mindestens drei unterschiedlichen geometrischen Messpunkten die Abstände zwischen der Auflagefläche (15f) des Körpers (7) der Spannschraube und dem zu klemmenden Bauteil (1) messen kann.

8. Vorrichtung nach Anspruch 7, die eine Recheneinrichtung enthält, die in der Lage ist, abhängig von den mindestens drei gemessenen Abständen die am wenigsten gespannte Stange zu lokalisieren.

9. Vorrichtung nach Anspruch 7 oder 8, wobei die Spannschraube eine Ruhekonfiguration aufweist, in der die den zu steuernden Stangen entsprechenden Kolben (8) durch innere Anschläge (20) des Körpers (7) der Spannschraube (6) fixiert werden, wobei eine Bezugsfläche der Spannschraube von der Vielzahl der Auflageflächen der Kolben in Ruhestellung definiert wird; wobei die Greiforgane (9) der zu steuernden Stangen dazu bestimmt sind, vor dem Aufbau der Vorspannung gegen die Bezugsfläche der Spannschraube angelegt zu werden; wobei die Anpresseinrichtung nach dem Aufbau der Vorspannung in der Lage ist, die Bezugsfläche (35) der Spannschraube (6) gegen mindestens drei Kontakt-Greiforgane (9c) anzupressen.

10. Vorrichtung nach einem der Ansprüche 7 bis 9, wobei der Spannschraubenkörper (7) eine globale Ringform aufweist, und wobei die zu steuernden Stangen (4) um einen Kreis verteilt und parallel zur Achse der Ringform sind.

11. Vorrichtung nach Anspruch 10, wobei die Auflagefläche (15) des Körpers (7) der Spannschraube (6) auf dem Bauteil (1) eine globale Kranzform aufweist; wobei die Anpresseinrichtung (28-29) auf dem zu klemmenden Bauteil (1) aufliegt und den ringförmigen Körper (7) der Spannschraube (6) an drei auf dem Kranz verteilten Stützpunkten verschieben kann.

## Claims

1. Method of establishing and checking the axial preload in a tightening portion (34) of at least one shank of the screw or stud type (4), the establishing of the preload involving a step of tensioning an extension portion (33) of the shank (4) comprising the tightening portion (34) using a shank (4) gripper member (9) and a tensioner (6); **characterized in that** the checking method involves a step in which, prior to establishing the preload, the tensioner is brought into a rest configuration in which the tensioner has an initial length (T, T (θ)) between a first bearing surface (24) and a second bearing surface (15) and the gripper member (9) is brought into contact with the first bearing surface (24) of the tensioner (6) in the rest configuration, then a step in which, having established the preload, the tensioner (6) is returned to its initial length (T, T(θ)) in said rest configuration, and, with the gripper member still fixed at the same spot on the shank that is to be checked, the tensioner in the rest configuration is pressed firmly toward one of the ends of the extension portion (33) until it is in abutment on the side of its first bearing surface (24) and the movement (S(θ)) of the second bearing surface (15) of the tensioner (6) between its position during the placement phase and its position during the pressing phase is compared against a threshold.

2. Method according to Claim 1, in which the movement of the second bearing surface (15) of the tensioner in line with several shanks preloaded by this tensioner is evaluated in order to estimate a minimum difference between the final length (Lfθ) and the initial length (Liθ) of the extension portion (33) of each shank.

3. Method according to Claim 1 or 2, intended for checking at least two shanks each having a tightening portion (34) of the same length, in which method the shank that exhibits the smallest difference between the final length (Lfθ) and the corresponding initial length (Liθ) is identified in order to identify which shank has the minimum preload.

4. Method according to any one of Claims 1 to 3, intended for checking the tightening preload of at least three parallel shanks comprising tightening portions (34) of the same length, the establishing of the preload employing shank gripper members located at one of the ends of the extension portions (33) of the shanks (4), the relative positions of the other ends of the extension portions (33) being unchanged by the establishing of the preload, the checking method involving a step in which, prior to establishing the preload, the gripper members (8) are brought into contact with a reference surface (35) of the tensioner (6) in the initial position (35i) and in which, once the preload has been established, the reference surface (35) is pressed firmly into a final position (35f) against at least three of the gripper members (9f) and the distance between the initial position (35i) and the final position (35f) of the reference surface (35) is measured at at least three measurement points.

5. Method according to Claim 4, in which a minimal difference (Sθ) between the final length (Lfθ) and the initial length (Liθ) of the extension portion (33) of the shank is calculated for each shank as a function of the distances measured.

6. Device for establishing and checking the axial preload of at least one shank (4) when tightening a component (1), the device comprising, for the shank (4) that is to be checked, a gripper member (9) located on the shank (4) and a tensioner (6) equipped with a body (7) and with a piston (8); said tensioner (6) comprising a first bearing surface (24) via which the piston (8) bears against a complementary surface (26a) of the gripper member (9) and a second bearing surface (15) via which the tensioner (6) body (7) bears against a complementary surface of the component (1) that is to be tightened; said tensioner (6) having a rest configuration in which the bearing surfaces (24, 15) are fixed relative to one another and intended, when not in the rest configuration, to apply tension to the shank (4), **characterized in that** it comprises a placement means (9) for placing the gripper member against the first bearing surface (24) of the tensioner (6) in the rest configuration, a pressing means (28-29) for pressing the first bearing surface (24) of the tensioner (6) firmly against the corresponding complementary surface (26a), while at the same time keeping the gripper member (9) fixed with respect to the shank (4) and a comparison means (29-30) for comparing the movement (Sθ) of the second bearing surface (15) of the tensioner (6) between its position during the placement phase and its position during the pressing phase, against a threshold.

7. Device according to Claim 6, intended for the simultaneous checking of the tightening preload of a plurality of parallel shanks (4) on tightening portions (34) of the same length, the device comprising a tensioner body (7) common to the shanks (4) that are to be checked, a plurality of pistons (8) corresponding to the shanks (4), and measurement means (29-30) capable of measuring the distance between the bearing surface (15f) of the body (7) of the tensioner and the component (1) that is to be tightened, at at least three separate geometric measurement points.

8. Device according to Claim 7, comprising a calculation means capable of locating the least tensioned shank as a function of the at least three distances measured.

9. Device according to Claim 7 or 8, in which the tensioner has a rest configuration in which the pistons (8) corresponding to the shanks that are to be checked are immobilized by internal limit stops (20) of the tensioner (6) body (7), a reference surface of the tensioner being defined by the plurality of bearing surfaces of the pistons at rest; the gripper members (9) of the shanks that are to be checked being intended to be brought into contact, before the preload is established, with the reference surface of the tensioner; the pressing means being capable, once the preload has been established, of pressing the reference surface (35) of the tensioner (6) firmly against at least three contact gripper members (9c).

10. Device according to any one of Claims 7 to 9, in which the tensioner body (7) is of annular overall shape and in which the shanks (4) to be checked are distributed around a circle and are parallel to the axis of the annular shape.

11. Device according to Claim 10, in which the bearing surface (15) via which the tensioner (6) body (7) bears against the component (1) is in the overall shape of a ring; the pressing means (28-29) bearing against the component (1) that is to be tightened and being capable of moving the annular body (7) of the tensioner (6) at three support points distributed about the ring.
